# EUROPEAN PATENT SPECIFICATION

(11) **EP 3 143 336 B1**
(45) Date of publication and mention of the grant of the patent: **22.01.2020**
(21) Application number: 15724566.3
(22) Date of filing: 13.05.2015
(51) Int. Cl.: F24C 15/00, F24C 15/04

(54) **WINDOWED DOOR FOR A COOKING APPLIANCE**
TÜR MIT FENSTERN FÜR EIN KOCHGERÄT
PORTE À FENÊTRE POUR UN APPAREIL DE CUISSON

(30) Priority: 16.05.2014 EP 14168591
(43) Date of publication of application: 22.03.2017
(73) Proprietor: Electrolux Appliances Aktiebolag, 105 45 Stockholm (SE)
(72) Inventor: IVANOVIC, Branko, 91541 Rothenburg ob der Tauber (DE); HILDNER, Dietmar, 91541 Rothenburg ob der Tauber (DE); KÄSER, Erhard, 91541 Rothenburg ob der Tauber (DE)
(74) Representative: Electrolux Group Patents
(86) International application number: PCT/EP2015/060657
(87) International publication number: WO 2015/173332

(56) References cited:
- DE-A1-102007 056 415
- DE-A1-102010 063 847
- DE-U1- 20 107 743

## Description

The present application is directed to a windowed door for a cooking appliance, in particular to a windowed door for a cooking oven, according to the preamble of claim 1. Moreover the present application is directed to a cooking appliance with such a windowed door.

To be able to observe food while being cooked in a cooking chamber of a cooking appliance - such as ovens, steamers, microwaves, grills or combinations thereof for example - the cooking chamber is usually closed with a windowed door. Thereby it is no longer necessary to open the cooking appliance to check the cooking process and a stable cooking temperature can be maintained.

A windowed door for a pyrolytic self-cleaning oven is for example known from US 3 760 792 A. The door of the oven includes a cooling air channel between two adjacent glass panes with air inlet means along the bottom of the door and air outlet means along the top of the door. A manually operable hollow shutter is mounted for movement within the air channel between an open position hidden within the door to permit viewing through the window and a closed position for covering the glass pane for both restricting the radiation of heat through the window openings and forcing the cooling air to pass through the shutter. By changing of the position of the shutter from the open to the closed position the air inlet means are opened. Such a cooling with air during a self-cleaning operation of the oven is necessary to reduce the temperature at the outer side of the door for avoiding injuries of a user by contact with the outer side of the door. Although with such a shutter the temperature on the outer side of the door can be reduced, it has turned out that users sometimes forget to change the position of the shutter and thereby opening of the air inlet means before activating the self-cleaning operation of the oven and therefore the danger of injuries of a user cannot be reliably excluded.

From DE 103 49 313 A1 a cooking oven with a windowed door is known which provides a front plate and a rear plate which are connected with each other by lateral U-shaped carriers. To avoid injuries of a user caused by high temperatures on the outer side of the front plate the hollow space between the plates can be cooled by external air flowing from bottom to top of the door and by passing through openings in the carriers in the upper part of the door wherein these openings are surrounded by mechanical barriers integrated within the carriers to prevent air warmed up by the flange of the muffle of the oven from flowing into the hollow space. However, in operation it has turned out that moisture can be drawn within the hollow space due to permanently flow of external air through the hollow space which can cause fogging of the glass panes of the front plate and rear plate.

DE 201 07 743 U1 discloses an oven door for a cooking oven. The oven door comprises two single plates. An intermediate space is arranged between said plates. The vertical sides of the intermediate space are permanently closed, while the horizontal sides of said intermediate space are openable and closable by automatic closure devices. The intermediate space is provided as an air flow channel, in which air streams bottom-up. The closure devices are formed as elongated ventilation flaps.

DE 10 2010 030 335 A1 discloses a door for a domestic appliance. An intermediate space is arranged between an inner and outer plate. A door ventilation device is arranged in the intermediate space. The door ventilation device includes an automatic ventilation flap arranged on the top side of the door. An intermediate plate is arranged between the inner and outer plate in order to subdivide the intermediate space in an inner and outer space.

It is an object of the present invention to remove the problems and inconveniences observed with state of the art. In particular a windowed door for a cooking appliance with user friendly handling and / or effecting a lower energy consumption of the cooking appliance shall be provided. Further a cooking appliance with such a windowed door shall be provided.

This object is solved by claims 1 and 13. Embodiments in particular result from dependent claims.

According to the present invention the at least one automatically moveable closure device is designed to carry out a horizontal movement to regulate the air flow through the hollow space.

Expediently the glass panes of the front plate and the inner plate are aligned to each other to be able to look into the cooking chamber of the cooking appliance. The front plate can provide a frame with a window opening in which the glass pane is inserted or can be built by the glass pane itself. The same applies for the at least one inner plate.

The front plate and the at least one inner plate can be connected with each other not only by lateral frame parts, but by a U-shaped or a peripheral frame, too, which include such lateral frame parts. Furthermore, the lateral frame parts or the U-shaped frame or the peripheral frame for connection of the plates can be provided in the region of the outer edges of the plates or offset inwards with respect to the outer edges. Further on, the plates can be connected with each other only or additionally by at least lateral frame parts or a U-shaped frame or a peripheral frame in the region of the glass panes of the plates. The general function of the lateral frame parts or the U-shaped frame or the peripheral frame is to keep the front plate and the at least one inner plate fixed to each other. The front plate, the at least one inner plate together with the lateral frame parts or the U-shaped frame or the peripheral frame is hereinafter referred to "door mechanical structure". Especially in the case of use of a U-shaped frame the upper part of the windowed door can be closed by a door cap to build a kind of peripheral frame comprising the U-shaped frame and the door cap.

By connection of the outer plate and the at least one inner plate by lateral frame parts the glass panes of outer plate and at least one inner plate are spaced from one another which results in formation of a hollow space between the plates or rather the panes. To establish an air flow through the hollow space between the glass panes of the front plate and the at least one inner plate in case of a peripheral frame at least one air passage aperture for air inlet and at least one air passage aperture for air outlet have to be provided in the frame. In case of a U-shaped frame in combination with a door cap at least one air passage aperture for air inlet has to be provided in the base of the U-shaped frame and at least one air passage aperture for air outlet has to be provided in the door cap or has to be built between door mechanical structure and door cap. If only lateral frame parts are provided the side areas of the hollow space not limited by the lateral frame parts can serve as air passage apertures for air inlet and air outlet and can serve as air inlet opening and air outlet opening. To establish a continuous air channel and especially an air flow from at least one air inlet opening to at least one air outlet opening thereby passing the hollow space between the glass panes it is necessary that in case of horizontal or inclined frame parts or other horizontal or inclined supports or struts within the door mechanical structure and situated between at least one air inlet opening and at least one air outlet opening these are provided with at least one air passage aperture. This or these air passage apertures can serve as air inlet opening and / or air outlet opening, too, and can be situated at the beginning of the air channel, that means near or at the at least one air inlet opening, or somewhere within the air channel - for example if the glass panes are fixed to each other with additional lateral frame parts or an additional U-shaped or peripheral frame - or at the end of the air channel, that means near or at the end of the at least one air outlet opening, dependent on the individual design of the door mechanical structure.

The at least one air inlet opening or the at least one air outlet opening or the at least one air passage aperture can be constituted by a slot-like opening. Expediently more than one air inlet opening and / or air outlet opening are provided to provide a homogeneous air flow through the door and in particular through the hollow space between the front plate and the at least one inner plate. Especially the at least one air inlet opening at the bottom of the door is situated in the lower third of the windowed door, or in at least one lateral side of the windowed door and the at least one air outlet opening at the top of the door is situated in the upper third of the windowed door to achieve a good cooling effect of the front plate of the door and in particular a vertical air flow through the hollow space.

For instance, as mentioned before the at least one air passage aperture can be constituted by the at least one air inlet opening, the at least one air outlet opening or by an opening of the hollow space not limited by the lateral frame parts.

The term "automatically moveable" shall mean that no direct manual interaction with a user is necessary, user need not to effect directly a movement.

The invention is based on the recognition that a cooking appliance with a windowed door which provides an air channel between at least two glass panes of the door for providing a permanent air flow through the hollow space between the glass panes has an increased energy consumption in comparison to a cooking appliance with a windowed door which does not comprise such an air channel.

Moreover, the invention is based on the consideration that cooling of a windowed door is usually only necessary when the cooking appliance is operated at high temperatures, for example during a self-cleaning operation or so-called pyrolytic cycle of the cooking appliance, whereas during normal operation often only less or no cooling and in particular during a preheating operation no cooling of the door is required because the door will not reach temperatures which could cause injuries to a user by contact with the outer side of the door.

The applicant has found that by providing an automatically moveable closure device which permits the regulation of air flow through an air channel within a windowed door by changing the cross-section of at least one air passage aperture within or at the end or at the beginning of the air channel the air flow can be purposefully adapted to the operation mode of a cooking appliance. For example during a self-cleaning operation of the cooking appliance which is accompanied with high temperatures the closure device can provide that the cross-section of the at least one air passage aperture is completely permeable for air, whereas during normal operation the closure device provides at least a partial reduction of the cross-section of the at least one air passage aperture. Hereby the energy consumption of the cooking appliance can be positively influenced, dependent on the operation mode of the cooking appliance the cross-section of the at least one air passage aperture is changeable whereby energy loss because of unnecessary cooling of the windowed door can be avoided. Further on, applicant has found that by such an automatically moving closure device no damages to the windowed door and / or a corresponding cooking appliance as well as injuries of the user by unintentional contact with the door during operation of the cooking appliance at high temperatures will occur in comparison to closure devices which require for example manual operation by a user for opening an air inlet opening - because in the latter case it cannot be excluded that the user forgets to change the position of closure device. Because a windowed door with an automatically moveable closure device requires no explicit action of the user to induce or stop cooling of the windowed door the handling of a cooking appliance with a windowed door according to the invention is much more convenient and easier for the user.

In embodiments of the windowed door, the at least one closure device is designed so that it can completely interrupt an air flow through the hollow space. This is advantageous because the energy consumption of a cooking appliance during a preheating mode can be reduced because in this mode no cooling of the windowed door and in particular of the front plate is required, in particular it is favourable that the glass panes stay warm in this mode. Further on, if in the surrounding of the cooking appliance exists high air moisture or if the cooking appliance is operated in a steam mode a complete interrupt of the air flow, in particular at the beginning of the air channel or rather at the at least one air inlet opening is favourable to avoid fogging of the glass panes due to air moisture.

In embodiments of the windowed door, the at least one closure device is arranged within a door cap which is arranged at the top of the windowed door. The term "arranged within" shall mean that the closure device is part of the door cap, however, the closure device does not have to be completely within a housing of the door cap, but can build a part of the door cap, especially a replaceable part. The door cap itself can be a removable, exchangeable part which at least partially covers the top of the windowed door. Such door caps are usually provided with at least one air outlet opening, in particular with one or several slot-like openings. By providing the at least one closure device within the door cap an easy exchange of the closure device in case of failure is possible, even a complete change of the door cap can be considered. By arrangement of the at least one closure device within the door cap the air flow through the air channel can be regulated by changing the cross-section of the at least one air outlet opening provided in the door cap. However, dependent on the design of the door cap and the at least one closure device the cross-section of the hollow space between front plate and at least one inner plate could be changed, too.

In embodiments of the windowed door, the at least one closure device is arranged between the front plate and the at least one inner plate. The term "between the plates" shall mean that the closure device can be arranged within the door mechanical structure of the windowed door, in particular in such cases in which the at least one inner plate is the rear plate of the windowed door. The arrangement of the at least one closure device can be in longitudinal direction or in cross direction with respect to the front plate and the at least one inner plate. Preferably the at least one closure device is arranged at least partially above or beyond the glass panes of the front plate and the at least one inner plate, whereby an upper or lower opening of the hollow space between the glass panes can be regarded as the at least one air passage aperture whose cross-section can be changed with help of the at least one closure device.

In embodiments of the windowed door, the at least one closure device is in direct contact with the front plate or the at least one inner plate when interrupting the air flow through the hollow space. The term "direct contact" shall include a contact with a sealing provided at the front plate or at the at least one inner plate, too. It is especially advantageous if the at least one closure device is in direct contact with the front plate as well as with the at least one inner plate and is arranged above or beyond an opening of the hollow space. Thereby it can be ensured that a reliable closure of the opening and thus an interruption of an air flow through the hollow space can be achieved.

In embodiments of the windowed door, between the front plate and the at least one inner plate at least one further plate comprising a glass pane is arranged. Advantageously, the at least one inner plate constitutes the rear plate of the windowed door. To achieve a better insulation effect of the cooking chamber of a cooking appliance which is closed with a windowed door it is advantageous to provide multiple-glazing. Loss of heat and thus energy consumption of the cooking appliance can be reduced. It is also possible that front plate or rear plate or any intermediate plates of a windowed door do not only comprise a single glass pane, but a - in particular integral - subunit of several glass panes.

In embodiments of the windowed door, the at least one closure device is designed to carry out a horizontal movement to regulate the air flow through the hollow space. In particular by an arrangement of the closure device between the front plate and the at least one inner plate and / or above or beyond an opening of the hollow space with a horizontal movement the cross-section of the opening can be easily progressively or gradually changed.

In embodiments of the windowed door, the at least one automatically moveable closure device comprises at least one shape memory alloy element designed to change the cross-section of the at least one air passage aperture by moving of a cover element.

The cover element is preferably adapted to fully cover the cross-section of the at least one air passage aperture. Expediently the cover element is movable in three mutually orthogonal directions.

The shape memory alloy element can be made from a copper-aluminium-nickel or a nickel-titanium alloy. Shape memory alloy elements have the ability to return to a previously defined shape or size when subjected to an appropriate thermal procedure. Generally these materials can be plastically deformed at relatively low temperature and upon exposure to higher temperature they return to their shape prior to the deformation. Shape memory alloys can have different shape memory effects, a so-called "one-way memory effect" and a so-called "two-way memory effect". The one-way memory effect can be described as follows: When the shape memory alloy is in its cold state the metal can be bent or stretched and will hold those shapes until heated above a transition temperature. Upon heating the shape changes to its original. When the metal cools again, it will remain in the hot shape, until deformed again. The two-way memory effect is the effect that the material remembers two different shapes: one at low temperatures and one at high temperatures. In other words: A material that shows a shape memory effect during both heating and cooling is called two-way shape memory. To achieve this the material has to be "trained" to "remember" its shape in the deformed low-temperature condition.

The shape memory alloy element can be designed for example as strip, wire, spring, lamella, fin or vane. To be able to withstand more than 10.000 movement cycles and / or deformation cycles a thickness of at least 0,1 mm of the shape memory alloy element is favourable. In particular a thickness of the shape memory alloy element of 0,1 to 1,2 mm is advantageous.

Further on, it is favourable if the shape memory alloy element can carry out a stroke in a range of 1 to 25 mm. With a stroke in this range a change of a cross-section of the at least one air passage aperture with the cover element with an ascertainable change of cooling of the windowed door can be realized.

In one embodiment the shape memory alloy element is designed to cause a movement of the cover element at a predefined temperature, in particular at a temperature within a temperature range of 40°C to 100°C. For example the shape memory alloy can be designed to return to its original shape at a temperature of 80°C. That means, when the shape memory alloy element reaches this temperature it will return to its original shape and provide a movement of the cover element whereby a cross-section of the at least one air passage aperture can be changed, in particular can be increased. To be able to change the size of the cross-section of the at least one air passage aperture step-by-step the at least one automatically moveable closure device can be provided with more than one shape memory alloy element which can cause different strokes or lengths of movement of the cover element at different predefined temperatures. For instance three shape memory alloy elements with different transition temperatures, for example 60°C, 80°C and 100°C could be provided which lead to different grades of movement of the cover element, for example 5 mm, 10 mm and 15 mm.

In another embodiment the shape memory alloy element is designed to cause a progressive movement of the cover element, in particular dependent on the temperature change of air within the air channel. Thereby a progressive change of the cross-section of the at least one air passage opening can be achieved, which allows a very good adjustment of the air cooling effect of the windowed door. For example with a shape memory element providing a "two-way memory effect" at 60°C and 80°C a progressive shape modification or rather a progressive movement within this temperature range is possible. At a temperature of 70°C that shape memory element can be in an intermediate position for example, that means the shape memory element will have a shape between its shape at 60°C and its shape at 80°C. In other words, a movement or shape modification of the shape memory element between a starting temperature (first shape) and a final temperature (second shape) will occur progressively. If final or target temperature is not completely reached shape memory element will have a shape between first and second shape. If temperature of shape memory element is further increased to final temperature shape memory element will reach its second shape, however if shape memory element cools down again to starting temperature shape memory element will return from its intermediate shape to its first shape.

In embodiments the at least one automatically moving closure device comprises at least one return member designed to bring back the shape memory alloy element into an initial shape after a warming up process followed by a cooling down process of the shape memory alloy element. To be able to repeatedly use a shape memory alloy element which comprises a one-way memory effect as an actuator a return member has to be provided with which the shape memory alloy element can be brought back from its original shape to its initial, deformed shape after being heated to a temperature above its transition temperature. The return member can be a spring, in particular a coil spring or flat spring.

In embodiments the shape modification of the shape memory alloy element is caused by heating of the shape memory alloy element via radiation heat emanating of the cooking chamber of the cooking appliance or via Joule heating or via induction heating. A shape modification of a shape memory alloy element which can be induced by radiation heat, in particular radiation heat emanating of the cooking chamber of the cooking appliance has the advantage that no further components with which a heating of the shape memory alloy element can be effected are required, whereby the closure device can be realized compact and light-weight. A shape modification of a shape memory alloy element which can be induced by Joule heating by providing an electric current flow through the shape memory alloy element as well as a shape modification of a shape memory alloy element which can be induced via induction heating allows a precise control of the shape memory alloy element and especially a precise control of the stroke that the shape memory alloy element will perform, whereby the amount of change of the cross-section of the at least one air passage aperture can be adjusted.

In particular, the cover element is essentially made from metal or plastic. A cover element made from metal, for example steel, has the advantage that it can withstand high temperatures and does not suffer material fatigue or deformation despite repeated large temperature changes. A cover element made from plastic has the advantage that it provides a lower weight in comparison to a cover element made from metal and therefore not so much force to move the cover element is required, that means with even a less powerful closure device a reliable movement of the cover element can be realized. The cover element can be made from a combination of metal or plastic, too, to make use of the advantages of both materials. Also a cover element made from a composite material is possible because such materials can for example withstand high temperatures and exhibit a certain flexibility which can ensure a reliable sealing of the cross-section of the at least one air passage aperture if required.

According to claim 13, a cooking appliance, in particular a cooking oven, is provided. The cooking appliance comprises a windowed door according to any embodiment and configuration as set out above. As to advantages, reference is made to the description above.

In embodiments of the cooking appliance, the cooking appliance provides a first and a second channel which are placed one above the other and wherein the first channel is arranged above the housing of a cooking chamber and the second channel is arranged beyond a control unit of the cooking appliance. Further on, a cooling fan is arranged at an area where the first and second channel are in operative connection with each other to provide an air flow of air entering into the at least one air inlet opening, passing through the hollow space and then escaping via the at least one air outlet opening, the first channel and the second channel. Hereby the air entering the windowed door through the at least one air inlet opening cannot only be used for cooling the door and in particular its front plate, but additionally for cooling the control unit. Thus malfunction or failure of electronic components of control unit or in particular electronic control mechanisms arranged above the housing of the the cooking chamber due to strong heat loads - for example during a self-cleaning operation of the cooking appliance with high temperatures within the cooking chamber - can be avoided. As to advantages and advantageous effects of the windowed door and the cooking appliance further reference is made to the description above and below.

Preferred embodiments of the invention will now be described in connection with the enclosed figures, in which:
- FIG. 1a: shows a perspective view of a cooking appliance,
- FIG. 1b: shows a fragmentary view from below of the windowed door of the cooking appliance of FIG. 1a,
- FIG. 2: is a fragmentary sectional view of the windowed door of the cooking appliance of FIG. 1a taken substantially along line II-II,
- FIG. 3: is a fragmentary sectional view of the cooking appliance of FIG. 1a taken substantially along line III-III with a position of a closure device of the windowed door allowing an air flow through the windowed door,
- FIG. 4: is a fragmentary sectional view of the cooking appliance of FIG. 1a taken substantially with a little parallel offset along line III-III with a position of the closure device of the windowed door interrupting an air flow through the windowed door,
- FIG. 5: shows a fragmentary sectional view of the windowed door of the cooking appliance of FIG. 1 taken substantially along line V-V of FIG. 3,
- FIG. 6: shows a fragmentary sectional view of the windowed door of the cooking appliance of FIG. 1a taken substantially along line VI-VI of FIG. 4,
- FIG. 7: shows a sectional view of the windowed door of the cooking appliance of FIG. 1a taken substantially along line V-V of FIG. 3 providing an alternative configuration of a closure device,
- FIG. 8: shows a sectional view of the windowed door of the cooking appliance of FIG. 1a taken substantially along line VI-VI of FIG. 7 providing an alternative configuration of a closure device,
- FIG. 9: shows a side view of the windowed door of the cooking appliance of FIG. 1a with a position of the closure device of the windowed door allowing an air flow through the windowed door, and
- FIG. 10: shows a side view of the windowed door of the cooking appliance of FIG.1a with a position of the closure device of the windowed door interrupting an air flow through the windowed door.

Note, that the windowed door and the cooking appliance will be described only as far as is necessary for covering the invention.

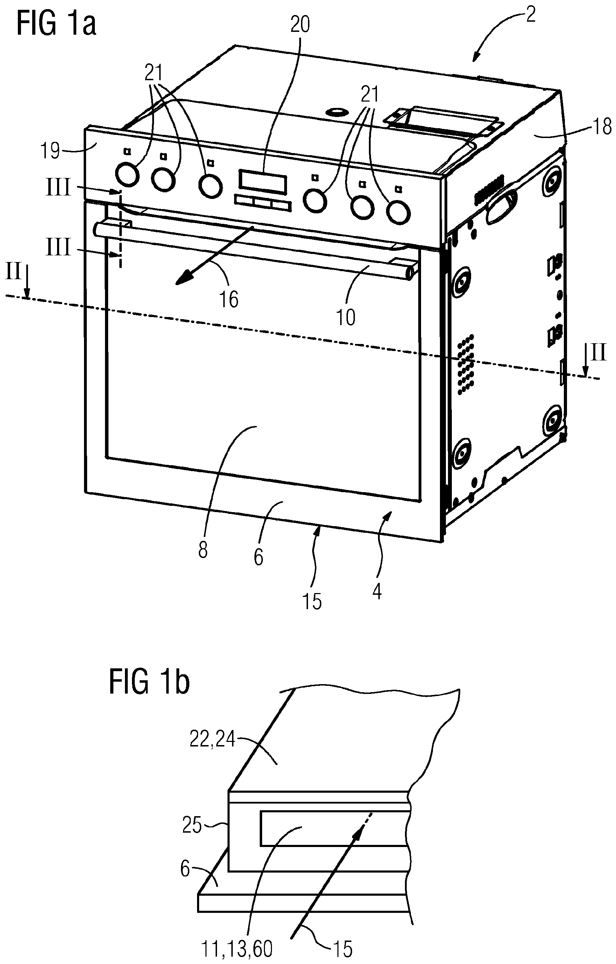

FIG. 1a shows a perspective view of a cooking appliance 2, present a cooking oven. The cooking appliance 2 comprises a windowed door 4. The front plate 6 of the windowed door 4 comprises a glass pane 8 and a handle 10. The windowed door 4 is furnished with a removable or rather exchangeable door cap 12 which is situated at the top of the windowed door. Present only the upper side of the door cap 12 is visible in FIG. 1a, the rest of the door cap 12 is obscured by the front plate 6. Further on, the cooking appliance 2 comprises a control unit 18 with an operating panel 19 with a user display 20 and adjustment knobs 21. At the bottom side of the windowed door 4 - see FIG. 1b - one or more air inlet openings 13 in the form of elongated slots are provided. Arrow 15 indicates cold air entering the air inlet openings 13 of the windowed door 4 and arrow 16 indicates hot air escaping from the cooking appliance 2 in the region of an opening between operating panel 19 and top of the windowed door 4 built by a recess 17 provided at the top of the windowed door 4.

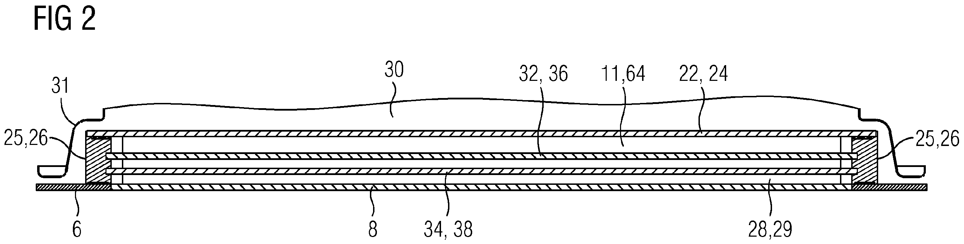

In FIG. 2 it can be seen that the windowed door 4 comprises an inner plate 22 which builds the rear plate of the windowed door 4. Inner plate 22 comprises a glass pane 24, too. Inner plate 22 and front plate 6 are connected with each other by a U-shaped frame 25 including lateral frame parts 26 and thereby define a hollow space 28 between them. This hollow space 28 constitutes an air passage aperture 29 with a cross-section defined by the distance of the in parallel arranged lateral frame parts 26 and the distance of the parallel arranged front plate 6 and inner plate 22 or rather glass pane 8 and glass pane 24. To achieve a better insulation of the cooking chamber 30, surrounded by housing 31, of the cooking appliance 2 two further inner plates or intermediate plates 32, 34 comprising glass panes 36, 38 are provided between front plate 6 and inner plate 22.

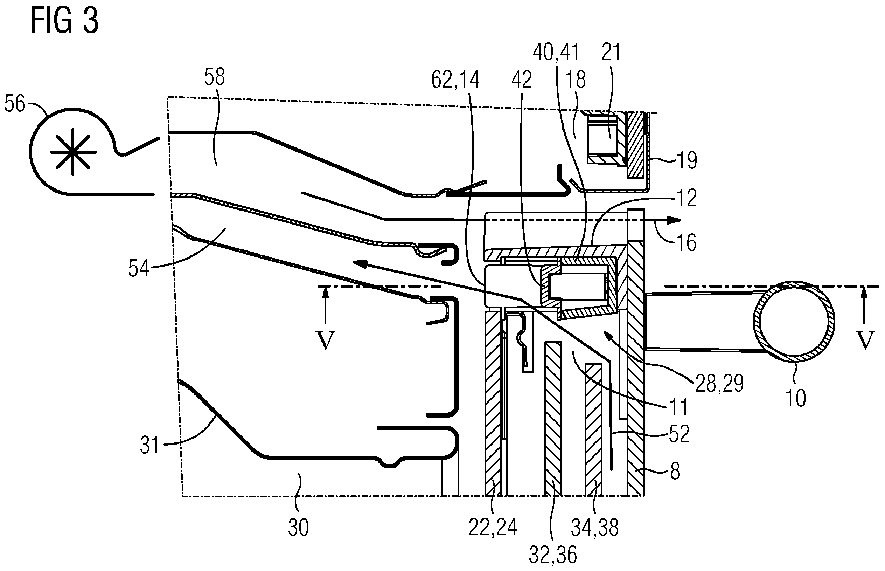

FIG. 3 shows a fragmentary sectional view of the cooking appliance 2 of FIG. 1 taken substantially along line III-III. The door cap 12 which covers the top of the windowed door 4 comprises a closure device 40 with which the cross-section of an air passage aperture 29, present the cross-section of the hollow space 28, of an air channel 11 between the air inlet openings 13 at the bottom side of the windowed door 4 and an air outlet opening 14 of the windowed door 4 and passing through the hollow space 28 between front plate 6 and inner plate 22 - or rather glass pane 8 and glass pane 24 - can be changed or rather regulated. Present the air channel 11 begins at the air inlet openings 13, indicated by reference numeral 60, runs through the hollow space 28 between front plate 6 and inner plate 22 and ends at air outlet opening 14, indicated by reference numeral 62 (see also FIG. 1b, FIG. 9 and FIG. 10).The slot-like air outlet opening 14 is built by a recess between door cap 12 and inner plate 22. However, it is possible that the closure device 40 or rather its housing 41 is not an integral part of the door cap 12, but is directly mounted within the door mechanical structure of the windowed door 4, too, that means closure device 40 could be arranged and fixed between front plate 6 and inner plate 22, especially in cases where the windowed door 4 does not comprise a door cap 12, but for example a peripheral frame. One longitudinal side of the closure device 40 can be in contact with or fixed to the inner side of the front plate 6 or present to a longitudinal side of the door cap 12. The both transverse sides of the closure device 40 extend along the top side of the frame parts 26. The closure device 40 is provided with an automatically moveable cover element 42 in form of a piston-shaped or hooded-shaped slider element which is movable along two lateral guide rails which extend along the top side of the frame parts 26. Closure device 40 itself and cover element 42 are essentially made from light-weight plastic material. However, the use of other materials is possible, too. The cover element 42 is designed in such a manner that it can carry out a stroke motion in horizontal direction, in the present case the cover element 42 can make a linear movement in a direction perpendicular to the area of the front plate 6 towards the inner plate 22. Dependent on the stroke of the closure device 40 or rather the cover element 42 the transversal length of the closure device 40 and hereby the cross-section of the air passage aperture 29, the hollow space 28, or rather the air flow between the glass panes 8, 24 can be varied.

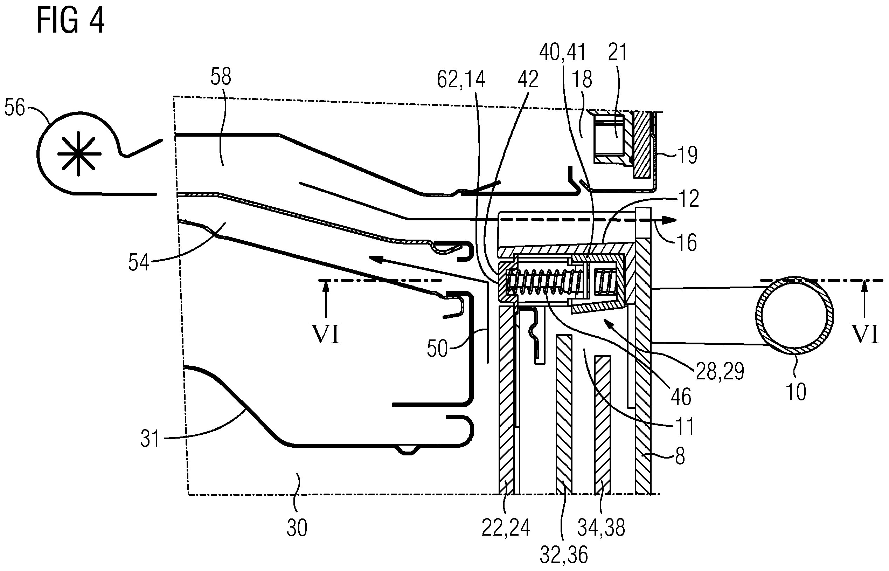

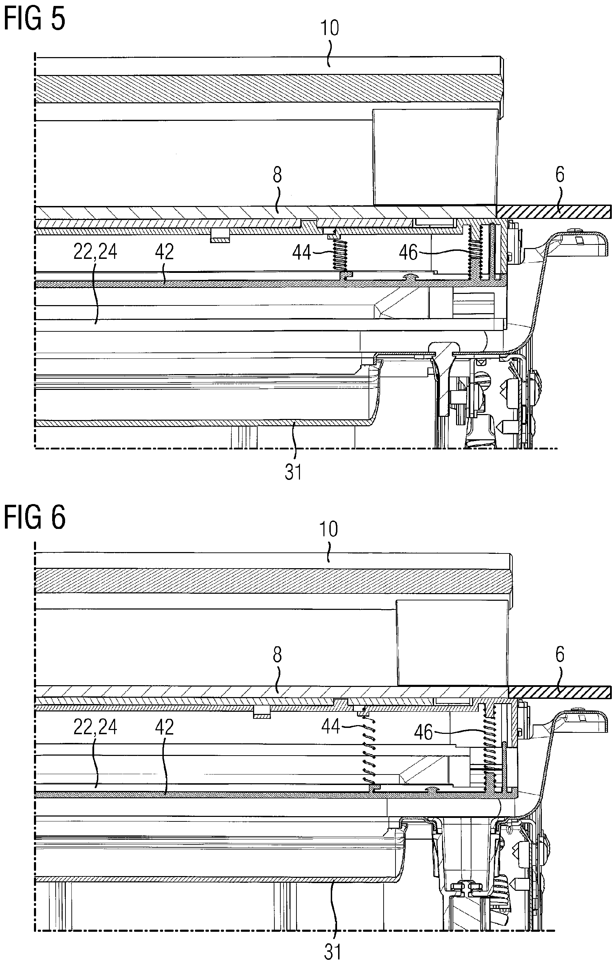

As can be seen in FIG. 5 the closure device 40 comprises two shape memory alloy elements 44 made from a nickel-titanium alloy in form of coil springs with a thickness of 1 mm with which the cover element 42 can be moved automatically. In other words, the shape memory alloy elements 44 serve as actuators for the cover element 42. The shape memory alloy elements 44 establish an operative connection between housing 41 of closure device 40 and its closure element 42. Note, because in FIG. 5 only a fragmentary sectional view of the windowed door 4 is shown only one of the shape memory alloy elements 44 and corresponding return member 46 is visible. The non-visible shape memory alloy element 44 and its corresponding return member 46 are arranged symmetrically in the other lateral end portion of the closure device 40. In its cold state the shape memory alloy elements 44 are impressed a deformation, present a deformation which provides a stretching of the shape memory alloy elements 44 induced by a spring force of return members 46 in form of coil springs (see FIG. 4 and 6, too). The shape memory alloy elements 44 comprise a "one-way memory effect", if they are warmed up to their transition temperature of 80°C due to the increase of temperature of air within the hollow space 28 caused by radiation heat emanating from the cooking chamber 30 they start to return to their initial, non-deformed shape. The shape memory alloy elements 44 are "trained" to progressively return to their initial shape with an increase of temperature starting from their transition temperature of 80°C to a temperature up to 150°C. That means the cover element 42 will start to make a stroke motion at 80°C and a maximum stroke will be reached at a temperature of 150°C. In the present case shape memory alloy elements 44 and return members 46 are designed to enable a stroke motion of up to 25 mm. Dependent on the design of the shape memory alloy elements 44 and corresponding return members 46, especially thickness and length, a larger stroke motion is possible. Instead of placing two shape memory alloy elements 44 and corresponding return members 46 symmetrically in the area of the lateral end portions of the closure device 40 or rather the cover element 42 only one shape memory alloy element 44 and corresponding return member 46 could be alternatively provided in the middle of the closure device 40 to provide a symmetrical shift of the cover element 42 along its entire length.

In FIG. 4 and FIG. 6 the closure device 40 is shown in its starting position with the visible shape memory alloy element 44 in its deformed or cold state. In the starting position no air flow between the glass panes 8, 24 is possible because the closure device 40 completely interrupts an air flow from the air inlet openings 13 through the air outlet opening 14. Until the shape memory alloy elements 44 reach a temperature of 80°C no air flow will occur, that means in a preheating operation of the cooking appliance 2 the glass panes 8, 24, 36, 38 will stay warm and will not actively cooled by air because the hollow space 28 is not permeable for air due to the position of the cover element 42. Only a warm air flow along the side of the glass pane 24 facing the cooking chamber 30 which emanates from the cooking chamber 30 is possible as indicated by arrow 50. If the shape memory alloy elements 44 reach a temperature of 150°C the cover element 42 will be in its end position, in other words a further retraction of the cover element 42 is no more possible. In this position as can be seen in FIG. 3 and FIG. 5 air can flow along the inner side of the glass pane 8 as indicated by arrow 52.

Air flow as indicated by arrows 50, 52 is lead along a first channel 54 above the housing 31 of the cooking chamber 30 from the front side of the cooking appliance 2 to its back side where a cooling fan 56 is arranged. By means of this cooling fan 54 the air passing through the first channel 54 can be redirected into a second channel 58. The air flow passing through the second channel 58 can escape through the recess 17 as indicated by arrow 16. As can be seen in FIG. 3 and FIG. 4 first channel 54 and second channel 58 are in connection with each other at the rear of the cooking appliance 2, where the cooling fan 56 is fixed. The second channel 58 runs above the first channel 54 and is located beyond the control unit 18. Hereby especially the air of air flow indicated by arrow 52 which is responsible for cooling of the inner side of front plate 6 or rather glass pane 8 can be used for cooling of the control unit 18, too. Thereby the risk of a failure of electronic components of the control unit 18 can be reduced.

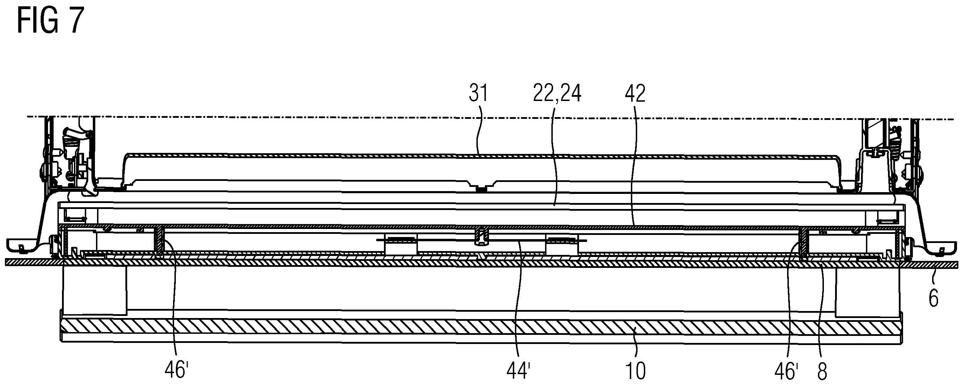

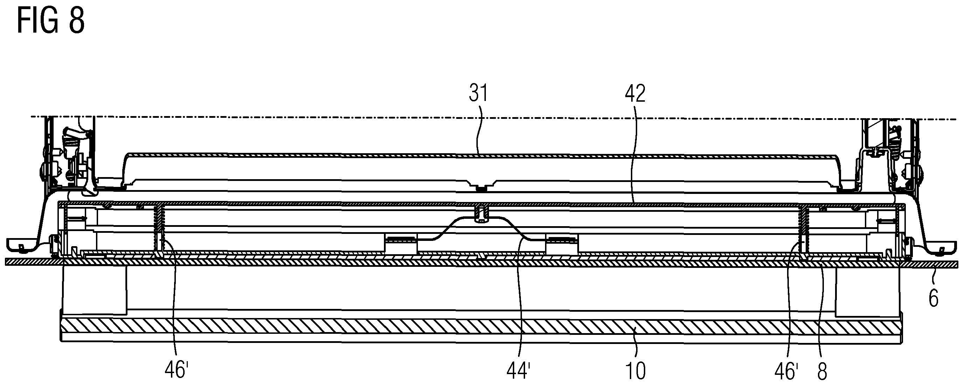

FIG. 7 and FIG. 8 differ only from FIG. 5 and FIG. 6 that they suggest the use of another kind and arrangement of shape memory alloy element 44' and corresponding return members 46' to move cover element 42. Present the closure device 40 comprises only one shape memory alloy element 44' made from a copper-aluminium-nickel alloy or a nickel-titanium alloy in form of a metal strip with a thickness of 1 mm whose middle part is fixed to the cover element 42 and whose ends are fixed to a side of a housing 41 of the closure device 40 which is situated opposite to an area of the cover element 42 which can change its position due to movement of the shape memory element 44'. In its cold state the metal strip is impressed a deformation, present a deformation which provides a curved shape of the shape memory alloy element 44' induced by a spring force of two return members 46' in form of coil springs (see FIG. 8). The return members 46' are laterally arranged beside the metal strip or rather the shape memory alloy element 44'. The coil springs as well as the metal strip are in the same operative connection with the side of the housing 41 of the closure device 40 and the area of the cover element 42 opposite this side of the housing 41 as aforementioned.

The metal strip comprises a "one-way memory effect" as described above with reference to the shape memory alloy elements 44 in form of coils springs. If the metal strip is warmed up to its transition temperature the metal strip starts to return to its initial, non-deformed shape, present a straightened shape. FIG. 7 shows the cover element 42 in its end position which allows air flow along the inner side of glass pane 8.

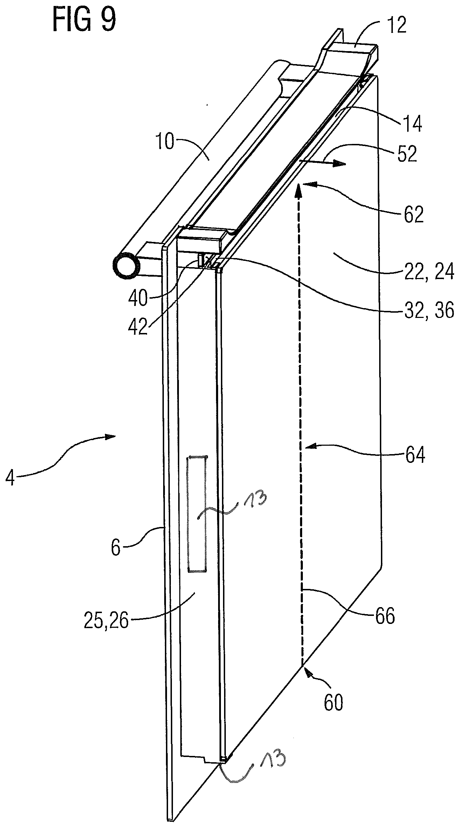

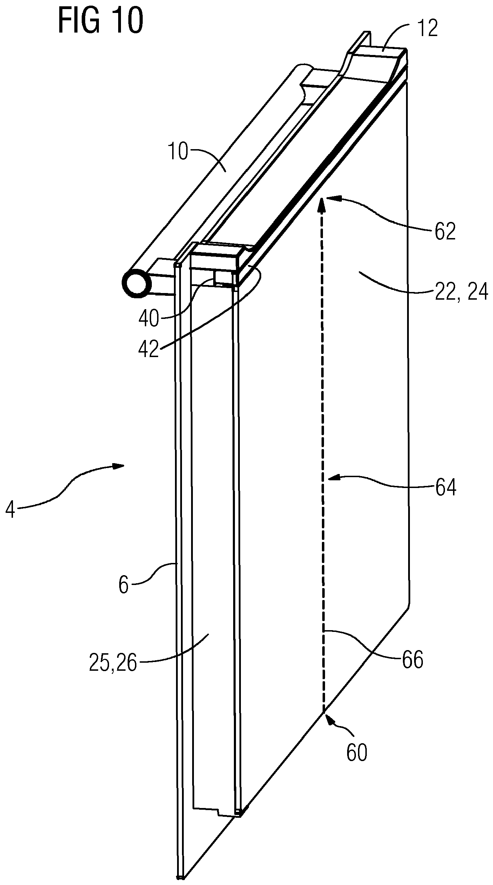

FIG. 9 and FIG. 10 show a side view of the windowed door 4 of the cooking appliance 2. The dotted arrow 66 schematically indicates the air flow between front plate 6 and inner plate 22. The beginning 60 of the air channel 11 in the lower part of the windowed door 4 is built by the air inlet openings 13 and the end 62 of the air channel 11 in the upper part of the windowed door 4 is built by air outlet opening 14. In alternative or in addition, air can enter from an air inlet opening 13 in at least one lateral side of the windowed door 4, such as indicated schematically in Fig. 9 and flow, in particular through the air channel 11, to the air outlet opening 14 in the upper part of the windowed door 4. It can be seen that in FIG. 9 the cover element 42 of the automatically moveable closure device 40 is in its fully retracted position or rather its end position. In this position air flow between inner side of glass pane 8 of front plate 6 and inner plate 22 or rather glass pane 24 is possible, this is demonstrated by arrow 52 which indicates the escaping air through air outlet opening 14. In FIG. 10 it can be seen that the cover element 42 of the automatically moveable closure device 40 is in its starting position. In this starting position no air flow at all between glass panes 8 and 24 is possible because air outlet opening 14 is fully closed or sealed by cover element 42 or rather its piston-shaped or hooded-shaped slider element.

It has turned out that the energy consumption of a cooking appliance 2 provided with such a windowed door 4 with an automatically moveable closure device 40 can be reduced of about 10 to 20 Wh without risk of high temperatures at the front plate 6 during normal operation in comparison to cooking appliances without such a door, in particular because the time for preheating of the cooking appliance 2 can be reduced. Moreover, especially during a self-cleaning operation of the cooking appliance 2 high temperatures at the outer side of front plate 6 and thus injuries of an user are avoidable, whereas food leftovers at the inner side of inner plate 22 are still easily removable. Furthermore, during a steaming operation especially fogging of the inner side of the glass pane 8 is avoidable, too.

Instead of arranging the closure device 40 above the glass panes 8, 22, 36, 38 an arrangement beyond would be possible, too. Dependent on the design of the windowed door 4 and its glass panes 8, 24 an arrangement within air channel, for example at position 64, might be possible. Also an arrangement next to the air inlet openings 13 or air outlet opening 14 to change the cross-section of these openings could be considered. Furthermore, instead of providing only one closure device 40 several closure devices could be provided, too, and / or one or more shape memory alloy elements 44, 44' and corresponding return members 46, 46'could be used for moving the cover element 42. A use of a shape memory alloy element 44, 44' with which step-by-step movements of the cover element 42 are possible could be also considered.

### List of reference numerals

- 2: cooking appliance
- 4: windowed door
- 6: front plate
- 8: glass pane of 6
- 10: handle
- 12: door cap
- 13: air inlet opening
- 14: air outlet opening
- 15: arrow, indicating entering external cold air
- 16: arrow, indicating escaping hot air
- 17: recess at top of the windowed door 4
- 18: control unit
- 19: operation panel
- 20: user display
- 21: adjustment knobs
- 22: inner plate
- 24: glass pane of 22
- 25: U-shaped frame
- 26: lateral frame part of 25
- 28: hollow space
- 29: air passage aperture
- 30: cooking chamber
- 31: housing
- 32: intermediate plate
- 34: glass plane of 32
- 36: intermediate plate
- 38: glass pane of 36
- 40: closure device
- 41: housing of closure device 40
- 42: cover element
- 44, 44': shape memory alloy element
- 46, 46': return member
- 50: arrow, indicating air flow emanating from the cooking chamber
- 52: arrow, indicating air flow passing through the hollow space 28 and escaping through air outlet opening 14
- 54: first channel
- 56: cooling fan
- 58: second channel
- 60: beginning of air channel 11
- 62: end of air channel 11
- 64: position between beginning 60 and end 62
- 66: arrow, indicating air flow between beginning 60 and end 62

## Claims

1. Windowed door (4) for a cooking appliance (2) comprising a front plate (6) and at least one inner plate (22) adapted for facing a cooking chamber (30) of the cooking appliance (2), wherein the front plate (6) and the at least one inner plate (22) each provide a glass pane (8, 24) and are connected with each other by at least lateral frame parts (26) to establish an air channel (11) from at least one air inlet opening (13) arranged at the bottom or in at least one lateral side of the door (4) through a hollow space (28) between the glass pane (8) of the front plate (6)and the glass pane (24) of the at least one inner plate (22) to at least one air outlet opening (14) arranged at the top of the door (4) and wherein at least one automatically moveable closure device (40) is provided which permits the regulation of air flow through the air channel (11) by changing the cross-section of at least one air passage aperture (29) within (64) or at the end (62) or at the beginning (60) of the air channel (11),
**characterised in that**
the at least one automatically moveable closure device (40) is designed to carry out a horizontal movement to regulate the air flow through the hollow space (28), the horizontal direction being considered with respect to a closed position of the door (4).

2. Windowed door (4) according to claim 1, wherein the at least one automatically moveable closure device (40) is designed so that it can completely interrupt an air flow through the hollow space (28).

3. Windowed door (4) according to claim 1 or 2, wherein the at least one automatically moveable closure device (40) is arranged within a door cap (12) which is arranged at the top of the windowed door (4).

4. Windowed door (4) according to claim 1 or 2, wherein the at least one automatically moveable closure device (40) is arranged between the front plate (6) and the at least one inner plate (22).

5. Windowed door (4) according to at least one of claims 1 to 4, wherein the at least one automatically moveable closure device (40) is in direct contact with front plate (6) or the at least one inner plate (22) when interrupting the air flow through the hollow space (28).

6. Windowed door (4) according to at least one of claims 1 to 5, wherein between the front plate (6) and the at least one inner plate (22) at least one further plate (32, 34) comprising a glass pane (36, 38) is arranged.

7. Windowed door (4) according to at least one of claims 1 to 6, wherein the at least one automatically moveable closure device (40) comprises at least one shape memory alloy element (44) designed to change the cross-section of the at least one air passage aperture (29) by moving of a cover element (42).

8. Windowed door (4) according to claim 7, wherein the shape memory alloy element (44, 44') is designed to cause a movement of the cover element (42) at a predefined temperature, in particular at a temperature within a temperature range of 40°C to 100°C.

9. Windowed door (4) according to claim 7, wherein the shape memory alloy element is designed to cause a progressive movement of the cover element (42) dependent on the temperature change of air within the air channel (11).

10. Windowed door (4) according to at least one of claims 7 to 9, wherein the at least one automatically moveable closure device (40) comprises at least one return member (46, 46') designed to bring back the shape memory alloy element (44, 44') into an initial shape after a warming up process followed by a cooling down process of the shape memory alloy element (44, 44').

11. Windowed door (4) according to at least one of claims 7 to 10, wherein the shape modification of the shape memory alloy element (44, 44') is caused by heating of the shape memory alloy element (44, 44') via radiation heat emanating of the cooking chamber (30) of the cooking appliance (2) or via Joule heating or via induction heating.

12. Windowed door (4) according to at least one of claims 7 to 11, wherein the cover element (42) is essentially made from metal or plastic.

13. Cooking appliance (2), in particular cooking oven, comprising a windowed door (4) according to at least one of claims 1 to 12.

14. Cooking appliance (2) according to claim 13, wherein the cooking appliance (2) provides
a) a first (54) and a second channel (58) which are placed one above the other and wherein the first channel (54) is arranged above the housing (31) of a cooking chamber (30) and the second channel (58) is arranged beyond a control unit (18)of the cooking appliance (2), and
b) a cooling fan (56) arranged at an area where the first (54) and second channel (58) are in operative connection with each other to provide an air flow of air entering into the at least one air inlet opening (13), passing through the hollow space (28) and then escaping via the at least one air outlet opening (14), the first channel (54) and the second channel (58).

## Patentansprüche

1. Mit einem Fenster versehene Tür (4) für ein Kochgerät (2), umfassend eine Frontplatte (6) und wenigstens eine Innenplatte (22), die geeignet ist, einem Garraum (30) des Kochgeräts (2) zugewandt zu sein, wobei die Frontplatte (6) und die wenigstens eine Innenplatte (22) jeweils eine Glasscheibe (8, 24) bereitstellen und über wenigstens seitliche Rahmenteile (26) miteinander verbunden sind, um einen Luftkanal (11) von wenigstens einer an dem unteren Rand oder in wenigstens einem seitlichen Rand der Tür (4) angeordneten Lufteinlassöffnung (13) durch einen Hohlraum (28) zwischen der Glasscheibe (8) der Frontplatte (6) und der Glasscheibe (24) der wenigstens einen Innenplatte (22) zu wenigstens einer an dem oberen Rand der Tür (4) angeordneten Luftauslassöffnung (14) herzustellen, und wobei wenigstens eine automatisch bewegbare Verschlusseinrichtung (40) bereitgestellt ist, die die Regelung des Luftstroms durch den Luftkanal (11) durch Ändern des Querschnitts wenigstens einer Luftdurchlassöffnung (29) in (64) dem Luftkanal (11) oder an dem Ende (62) oder dem Anfang (60) desselben ermöglicht,
**dadurch gekennzeichnet, dass**
die wenigstens eine automatisch bewegbare Verschlusseinrichtung (40) dazu ausgelegt ist, eine horizontale Bewegung durchzuführen, um den Luftstrom durch den Hohlraum (28) zu regeln, wobei die horizontale Richtung in Bezug auf eine geschlossene Stellung der Tür (4) gesehen ist.

2. Mit einem Fenster versehene Tür (4) nach Anspruch 1, wobei die wenigstens eine automatisch bewegbare Verschlusseinrichtung (40) so ausgelegt ist, dass sie einen Luftstrom durch den Hohlraum (28) vollständig unterbrechen kann.

3. Mit einem Fenster versehene Tür (4) nach Anspruch 1 oder 2, wobei die wenigstens eine automatisch bewegbare Verschlusseinrichtung (40) innerhalb einer Türabdeckung (12) angeordnet ist, die an dem oberen Rand der mit einem Fenster versehenen Tür (4) angeordnet ist.

4. Mit einem Fenster versehene Tür (4) nach Anspruch 1 oder 2, wobei die wenigstens eine automatisch bewegbare Verschlusseinrichtung (40) zwischen der Frontplatte (6) und der wenigstens einen Innenplatte (22) angeordnet ist.

5. Mit einem Fenster versehene Tür (4) nach wenigstens einem der Ansprüche 1 bis 4, wobei sich die wenigstens eine automatisch bewegbare Verschlusseinrichtung (40) in direktem Kontakt mit der Frontplatte (6) oder der wenigstens einen Innenplatte (22) befindet, wenn sie den Luftstrom durch den Hohlraum (28) unterbricht.

6. Mit einem Fenster versehene Tür (4) nach wenigstens einem der Ansprüche 1 bis 5, wobei zwischen der Frontplatte (6) und der wenigstens einen Innenplatte (22) wenigstens eine weitere Platte (32, 34) angeordnet ist, die eine Glasscheibe (36, 38) umfasst.

7. Mit einem Fenster versehen Tür (4) nach wenigstens einem der Ansprüche 1 bis 6, wobei die wenigstens eine automatisch bewegbare Verschlusseinrichtung (40) wenigstens ein Formgedächtnislegierungselement (44) umfasst, das dazu ausgelegt ist, den Querschnitt der wenigstens einen Luftdurchlassöffnung (29) durch Bewegen eines Abdeckelements (42) zu ändern.

8. Mit einem Fenster versehene Tür (4) nach Anspruch 7, wobei das Formgedächtnislegierungselement (44, 44') dazu ausgelegt ist, eine Bewegung des Abdeckelements (42) bei einer vorgegebenen Temperatur, insbesondere bei einer Temperatur in einem Temperaturbereich von 40 °C bis 100 °C, zu bewirken.

9. Mit einem Fenster versehene Tür (4) nach Anspruch 7, wobei das Formgedächtnislegierungselement dazu ausgelegt ist, eine fortschreitende Bewegung des Abdeckelements (42) abhängig von der Temperaturänderung der Luft in dem Luftkanal (11) zu bewirken.

10. Mit einem Fenster versehene Tür (4) nach wenigstens einem der Ansprüche 7 bis 9, wobei die wenigstens eine automatisch bewegbare Verschlusseinrichtung (40) wenigstens ein Rückführelement (46, 46') umfasst, das dazu ausgelegt ist, das Formgedächtnislegierungselement (44, 44') nach einem Aufwärmvorgang, auf den ein Abkühlvorgang des Formgedächtnislegierungselements (44, 44') folgt, zurück in eine Ausgangsform zu bringen.

11. Mit einem Fenster versehene Tür (4) nach wenigstens einem der Ansprüche 7 bis 10, wobei die Formänderung des Formgedächtnislegierungselements (44, 44') durch Erhitzen des Formgedächtnislegierungselements (44, 44') über aus dem Garraum (30) des Kochgeräts (2) ausströmende Abstrahlwärme oder über ohmsche Wärme oder über Induktionswärme bewirkt wird.

12. Mit einem Fenster versehene Tür (4) nach wenigstens einem der Ansprüche 7 bis 11, wobei das Abdeckelement (42) im Wesentlichen aus Metall oder Kunststoff hergestellt ist.

13. Kochgerät (2), insbesondere Backofen, umfassend eine mit einem Fenster versehene Tür (4) nach wenigstens einem der Ansprüche 1 bis 12.

14. Kochgerät (2) nach Anspruch 13, wobei das Kochgerät (2) Folgendes bereitstellt:
a) einen ersten (54) und einen zweiten Kanal (58), die übereinander liegen, und wobei der erste Kanal (54) über dem Gehäuse (31) eines Garraums (30) angeordnet ist und der zweite Kanal (58) außerhalb einer Steuereinheit (18) des Kochgeräts (2) angeordnet ist, und
b) ein Kühlgebläse (56), das in einem Bereich angeordnet ist, in dem der erste (54) und der zweite Kanal (58) miteinander wirkverbunden sind, um einen Luftstrom von Luft bereitzustellen, die in die wenigstens eine Lufteinlassöffnung (13) eintritt, durch den Hohlraum (28) strömt und dann über die wenigstens eine Luftauslassöffnung (14), den ersten Kanal (54) und den zweiten Kanal (58) entweicht.

## Revendications

1. Porte (4) à fenêtre pour appareil de cuisson (2) comprenant une plaque avant (6) et au moins une plaque intérieure (22) aptes à se trouver en regard d'une enceinte de cuisson (30) de l'appareil de cuisson (2), dans laquelle la plaque avant (6) et l'au moins une plaque intérieure (22) utilisent chacune une vitre (8, 24) et sont raccordées l'une à l'autre par au moins des pièces latérales (26) de cadre pour établir un conduit d'air (11) allant d'au moins une ouverture (13) d'entrée d'air, disposée au fond ou dans au moins un côté latéral de la porte (4) traversant un espace creux (28) entre la vitre (8) de la plaque avant (6) et la vitre (24) de l'au moins une plaque intérieure (22), à au moins une ouverture (14) de sortie d'air disposée au sommet de la porte (4) et
dans laquelle il est fait appel à au moins un dispositif de fermeture (40) à mouvement automatique qui permet de réguler le débit d'air passant par le conduit d'air (11) en modifiant la section transversale d'au moins une ouverture (29) de passage d'air à l'intérieur (64), à la fin (62) ou au début (60) du conduit d'air (11), **caractérisée en ce que** l'au moins un dispositif de fermeture (40) à mouvement automatique est conçu pour effectuer un mouvement horizontal afin de réguler le débit d'air passant par l'espace creux (28), la direction horizontale étant considérée par rapport à la position fermée de la porte (4).

2. Porte (4) à fenêtre selon la revendication 1, dans laquelle l'au moins un dispositif de fermeture (40) à mouvement automatique est conçu de façon à pouvoir interrompre complètement un débit d'air passant par l'espace creux (28).

3. Porte (4) à fenêtre selon la revendication 1 ou 2, dans laquelle l'au moins un dispositif de fermeture (40) à mouvement automatique est agencé à l'intérieur d'un chapeau (12) de porte qui est disposé au sommet de la porte (4) à fenêtre.

4. Porte (4) à fenêtre selon la revendication 1 ou 2, dans laquelle l'au moins un dispositif de fermeture (40) à mouvement automatique est agencé entre la plaque avant (6) et l'au moins une plaque intérieure (22).

5. Porte (4) à fenêtre selon au moins une des revendications 1 à 4, dans laquelle l'au moins un dispositif de fermeture (40) à mouvement automatique est en contact direct avec la plaque avant (6) ou l'au moins une plaque intérieure (22) lors de l'interruption du débit d'air passant par l'espace creux (28).

6. Porte (4) à fenêtre selon au moins une des revendications 1 à 5, dans laquelle entre la plaque avant (6) et l'au moins une plaque intérieure (22) est disposée au moins une autre plaque (32, 34) comprenant une vitre (36, 38).

7. Porte (4) à fenêtre selon au moins une des revendications 1 à 6, dans laquelle l'au moins un dispositif de fermeture (40) à mouvement automatique comprend au moins un élément (44) en alliage à mémoire de forme conçu pour modifier la section transversale de l'au moins une ouverture (29) de passage d'air en déplaçant un élément (42) de couvercle.

8. Porte (4) à fenêtre selon la revendication 7, dans laquelle l'élément (44, 44') en alliage à mémoire de forme est conçu pour provoquer un mouvement de l'élément (42) de couvercle à une température prédéfinie, en particulier à une température comprise dans une plage de températures de 40°C à 100°C.

9. Porte (4) à fenêtre selon la revendication 7, dans laquelle l'élément en alliage à mémoire de forme est conçu pour provoquer un mouvement progressif de l'élément (42) de couvercle en fonction du changement de température de l'air à l'intérieur du conduit d'air (11).

10. Porte (4) à fenêtre selon au moins une des revendications 7 à 9, dans laquelle l'au moins un dispositif de fermeture (40) à mouvement automatique comprend au moins un élément de retour (46, 46') conçu pour ramener l'élément (44, 44') en alliage à mémoire de forme dans sa forme initiale après un processus de réchauffement suivi d'un processus de refroidissement de l'élément (44, 44') en alliage à mémoire de forme.

11. Porte (4) à fenêtre selon au moins une des revendications 7 à 10, dans laquelle la modification de forme de l'élément (44, 44') en alliage à mémoire de forme est provoquée par le chauffage de l'élément (44, 44') en alliage à mémoire de forme au moyen de la chaleur rayonnée émanant de l'enceinte de cuisson (30) de l'appareil de cuisson (2) ou au moyen d'un chauffage par effet Joule ou au moyen d'un chauffage par induction.

12. Porte (4) à fenêtre selon au moins une des revendications 7 à 11, dans laquelle l'élément (42) de couvercle est réalisé essentiellement en métal ou en plastique.

13. Appareil de cuisson (2), en particulier four de cuisson, comprenant une porte (4) à fenêtre selon au moins une des revendications 1 à 12.

14. Appareil de cuisson (2) selon la revendication 13, l'appareil de cuisson (2) utilisant :
a) un premier (54) et un second (58) conduit qui sont placés l'un au-dessus de l'autre et dans lequel le premier conduit (54) est disposé au-dessus de la carrosserie (31) d'une enceinte de cuisson (30) et le second conduit (58) est disposé au-delà d'une unité de commande (18) de l'appareil de cuisson (2), et
b) un ventilateur (56), agencé au niveau d'une zone où les premier (54) et second (58) conduits sont raccordés fonctionnellement l'un à l'autre, pour assurer un débit d'air pour l'air entrant dans l'au moins une ouverture (13) d'entrée d'air, passant par l'espace creux (28) puis s'échappant par l'au moins une ouverture (14) de sortie d'air, le premier conduit (54) et le second conduit (58).
